Europäisches Patentamt

European Patent Office

Office européen des brevets

(19)

(11) Veröffentlichungsnummer: **0 224 740**
**A1**

(12) # EUROPÄISCHE PATENTANMELDUNG

(21) Anmeldenummer: 86115301.3

(22) Anmeldetag: 05.11.86

(51) Int. Cl.⁴: **F04C 29/02** , **F16N 7/18** , **F16N 7/26**

(30) Priorität: 18.11.85 DE 3540842

(43) Veröffentlichungstag der Anmeldung:
**10.06.87 Patentblatt 87/24**

(84) Benannte Vertragsstaaten:
**CH DE FR GB LI**

(71) Anmelder: **Leybold-Heraeus GmbH**
**Bonner Strasse 498 Postfach 51 07 60**
**D-5000 Köln 51(DE)**

(72) Erfinder: **Frings, Heinz**
**Mainstrasse 30**
**D-5000 Köln 50(DE)**
Erfinder: **Ronthaler, Karl-Heinz**
**Neusser Strasse 15**
**D-5352 Zülpich(DE)**
Erfinder: **Steffens, Ralf**
**Homburger Strasse 22**
**D-5000 Köln 51(DE)**

(74) Vertreter: **Leineweber, Jürgen**
**Am Heidstamm 78a**
**D-5000 Köln 40(DE)**

(54) **Schmiermittelschleuderscheibe.**

(57) Die Erfindung bezieht sich auf eine Schleuderscheibe für Schmiermittel, vorzugsweise für einen
teilweise mit Öl gefüllten Seitenraum (1) einer Drehkolbenvakuumpumpe (2) in welchen mindestens eine
Rotorwelle (4, 5) hineinragt; um die Schleuderwirkung drehzahlfest und viskositätsunabhängig zu machen, ist die Schleuderscheibe (13) in ihrem peripheren Bereich mit einer radial nach innen offenen
Rinne (14) ausgerüstet, welche mit Abspritzöffnungen (16) ausgerüstet ist.

FIG. 1

Xerox Copy Centre

EP 0 224 740 A1

## Schmiermittelschleuderscheibe

Die Erfindung bezieht sich auf eine Schleuderscheibe für Schmiermittel, vorzugsweise für einen teilweise mit Öl gefüllten Seitenraum einer Drehkolbenvakuumpumpe, in welchen mindestens eine Rotorwelle hineinragt.

Einige Drehkolbenvakuumpumpen, z. B. Wälzkolbenpumpen, weisen einen Schöpfraum auf, in dem die etwa 8-förmigen Kolben synchron rotieren. Die Rotorwellen sind in den seitlichen Begrenzungswänden des Schöpfraumes gelagert und ragen in Seitenräume hinein, in denen sich z. B. die synchrone Rotation sichernde Zahnräder befinden. Die Seitenräume sind teilweise mit Öl gefüllt, das mittels einer Schleuderscheibe ständig hochgespritzt wird und der Schmiermittelversorgung der Lager und Zahnräder dient. Die Schleuderscheibe ist auf einem der Wellenstümpfe montiert. Eine der Wellen durchsetzt den Seitenraum und ist nach außen dicht herausgeführt und dort mit einem Antriebsmotor gekoppelt.

Aus der DE-PS 19 39 717 ist eine Schleuderscheibe der geschilderten Art bekannt. Sie ist in ihrem Randbereich eben ausgebildet. Schleuderscheiben dieser Art haben den Nachteil, daß ihre Spritzwirkung sowohl drehzahl-als auch viskositätsabhängig ist. Mit steigender Drehzahl und steigender Temperatur nimmt die Spritzwirkung derartiger Schleuderscheiben ab. Weiterhin besteht bei Seitenräumen für Vakuumpumpen das Problem, daß in den Seitenräumen ein gegenüber der Atmosphäre verringerter Druck herrscht und deshalb eine erhöhte Schaumbildung auftritt, welche ebenfalls die Spritzwirkung der Schleuderscheibe beeinträchtigt.

Der vorliegenden Erfindung liegt die Aufgabe zugrunde, eine Schmiermittelschleuderscheibe zu - schaffen, deren Spritzwirkung im wesentlichen drehzahlfest und viskositätsunabhängig ist.

Erfindungsgemäß wird diese Aufgabe dadurch gelöst, daß die Schleuderscheibe in ihrem peripheren Bereich eine radial nach innen offene Rinne aufweist, welche mit Abspritzöffnungen ausgerüstet ist. Bei einer in dieser Weise ausgerüsteten Schleuderscheibe strömt in dem eintauchenden Bereich ständig Öl in die Umlauf-Rinne, welches dann infolge der Zentrifugalkraft durch die Abspritzöffnungen abgegeben wird. Der Zulauf des Öls in die erfindungsgemäße Rinne ist unabhängig von der Temperatur des Schmiermittels. Eine kritische Abhängigkeit der Spritzwirkung von der Drehzahl besteht ebenfalls nicht, wenn die Eintauchtiefe ausreichend groß bemessen ist.

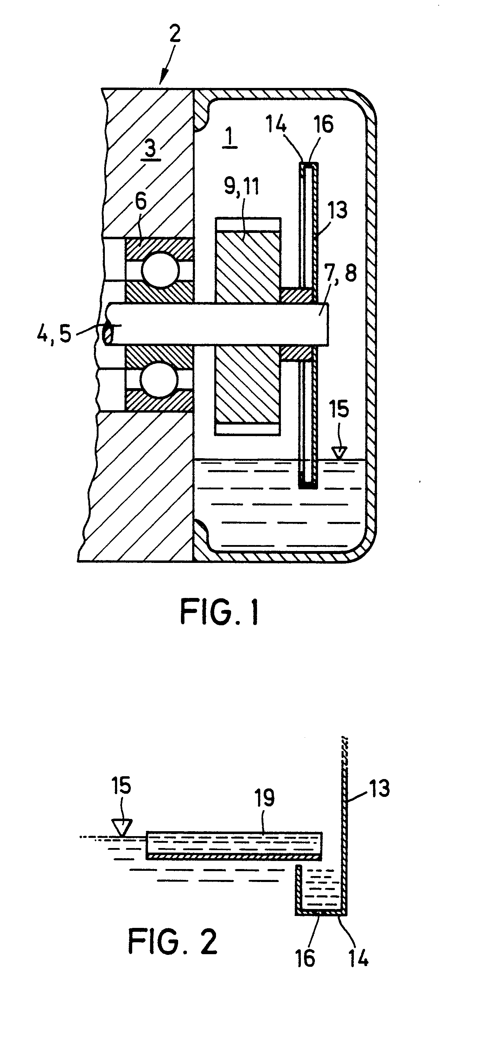

Weitere Vorteie und Einzelheiten der Erfindung sollen anhand von in den Figuren 1 und 2 dargestellten Ausführungsbeispielen erläutert werden.

Fig. 1 zeigt einen seitichen Getrieberaum 1 einer Wälzkolbenvakuumpumpe 2. Die Wandung 3 trennt den Seitenraum 1 vom nicht dargestellten Schöpfraum der Vakuumpumpe. Die Wellen 4, 5 - (eine ist nicht sichtbar) sind durch die Wandung 3 hindurchgeführt und in dieser gelagert (Wälzlager 6). Üblicherweise sind zwischen der Lagerung 6 und dem Schöpfraum Simmerringe oder Labyrinthdichtungen vorgesehen, die eine Trennung des Schöpfraumes vom Seitenraum 1 bewirken.

Auf den in den Seitenraum 1 hineinragenden Wellenstümpfen 7, 8 der Wellen 4, 5 sind Zahnräder 9, 11 montiert, die miteinander in Eingriff stehen. Außerdem ist auf dem Wellenstumpf 7 die kreisförmige Schleuderscheibe 13 montiert, deren Peripherie mit einer radial nach innen offenen, im Schnitt im wesentlichen U-förmigen Rinne 14 ausgerüstet ist. Der Durchmesser der Scheibe 13 ist so gewählt, daß sie bis unterhalb des Ölstandes 15 reicht, so daß ständig Öl in den eintauchenden Teil der Rinne 14 strömen kann.

Der Boden der Rinne 14 ist mit Bohrungen 16 versehen. Bei sich drehender Scheibe 13 wird das in der Rinne befindliche Öl durch die Bohrungen 16 abgegeben. Dadurch wird eine ausreichende Schmiermittelversorgung sowohl der Lagerungen 6 als auch der Zahnräder 9, 11 sichergestellt. Die Bohrungen 16 müssen nicht unbedingt radial gerichtet sein. Sie können auch seitlich an einer U-förmigen Rinne 14 oder an den geneigten Abschnitten einer V-förmigen Rinne angeordnet sein, so daß das Schmiermittel schräg zur Ebene der Schleuderscheibe 13 abspritzt.

Der wesentliche Vorteil der beschriebenen Ölschleuderscheibe besteht darin, daß ihre Wirkung viskositätsunabhängig ist. Eine Drehzahlabhängigkeit besteht insoweit, als mit zunehmender Drehzahl und damit zunehmender Zentrifugalkraft die Spritzwirkung und Schmiermittelversorgung ebenfalls zunehmen. Die Funktion ist durch Schaumbildung nicht beeinträchtigt. Weiterhin ist ihre Funktion sichergestellt, unabhängig davon, ob die Wälzkolbenpumpe mit waagerechter oder senkrechter Förderrichtung eingebaut ist.

Schließlich benötigt die erfindungsgemäße Ölschleuderscheibe eine relativ geringe Zulaufhöhe, so daß ihre Eintauchtiefe klein gewählt werden kann. Bei geringer Eintauchtiefe und besonders hohen Drehzahlen (6.000 U/min und mehr) besteht jedoch die Gefahr, daß das Schmiermittel nicht mehr in ausreichender Menge in die Rinne 14 strömt. In einem solchen Fall muß entweder die Eintauchtiefe größer gewählt oder -wie in Fig. 2 dargestet -eine feststehende Zulaufrinne 19 vorgesehen werden. Die Zulaufrinne 19 ist in Höhe des Ölspiegels 15 senkrecht zur Ebene der Scheibe 13 angeordnet, und zwar derart, daß sie vom nur unwesentlich von der rotierenden Scheibe 13 beeinflußten Bereich des Ölspiegels bis oberhalb der Rinne 14 reicht. Der Zulauf des Öls in die Rinne 14 ist damit unabhängig von der Drehzahl der Scheibe 13 sichergestellt.

Zweckmäßigerweise sind die Bohrungen 16 im Boden der Rinne 14 vorgesehen und gleichmäßig über die Peripherie der Schleuderscheibe 13 verteilt. Ihr Durchmesser ist so zu wählen, daß während des gesamten Umlaufs einer Bohrung ständig Öl abgegeben wird. Die der Rinne im eintauchenden Bereich zuströmende Menge sollte ständig etwas größer sein als die von den Bohrungen 16 während ihres Umlaufs abgegebene Ölmenge.

Die Rinne 14, die im Querschnitt U-oder V-förmig gestaltet sein kann, muß sich nicht unbedingt über die gesamte Peripherie der Scheibe 13 erstrecken. Auch Rinnenabschnitte, deren nachlaufende Enden vorzugsweise verschlossen sind, sind denkbar. Die Rinne 14 kann axialaußen oder -innen an der Scheibe 13 befestigt sein. Wird besonders viel Schmiermittel benötigt, können beide Seiten der Scheibe 13 mit Rinnen oder Rinnenabschnitten ausgerüstet sein.

## Ansprüche

1. Schleuderscheibe für Schmiermittel, vorzugsweise für einen teilweise mit Öl gefüllten Seitenraum einer Drehkolbenvakuumpumpe, in welchen mindestens eine Rotorwelle hineinragt, **dadurch gekennzeichnet**, daß die Schleuderscheibe (13) in ihrem peripheren Bereich eine radial nach innen offene Rinne (14) aufweist, welche mit Abspritzöffnungen (16) ausgerüstet ist.

2. Schleuderscheibe nach Anspruch 1, **dadurch gekennzeichnet**, daß sie kreisförmig ist und als Rand eine umlaufende Rinne (14) aufweist.

3. Schleuderscheibe nach Anspruch 1 oder 2, **dadurch gekennzeichnet**, daß die Abspritzöffnungen radial und/oder seitlich angeordnet sind.

4. Schleuderscheibe nach Anspruch 1, 2 oder 3, **dadurch gekennzeichnet**, daß die Abspritzöffnungen gleichmäßig über die Peripherie der Scheibe (13) verteilt sind.

5. Schleuderscheibe nach einem der Ansprüche 1 bis 4, **dadurch gekennzeichnet**, daß die Anzahl und der Durchmesser der Abspritzöffnungen so gewählt sind, daß die Menge des dem eintauchenden Bereich der Rinne zuströmenden Schmiermittels etwas größer ist als die von den Abspritzöffnungen während ihres Umlaufs abgegebene Schmiermittelmenge.

6. Schleuderscheibe nach einem der vorhergehenden Ansprüche, **dadurch gekennzeichnet**, daß ihr eine feststehende Zulaufrinne (19) zugeordnet ist.

7. Schleuderscheibe nach einem der vorhergehenden Ansprüche, **dadurch gekennzeichnet**, daß sie axial-außen und/oder axial-innen mit einer Rinne (14) oder mit Rinnenabschnitten ausgerüstet sind, deren nachlaufende Enden vorzugsweise verschlossen sind.

FIG. 1

FIG. 2

85 019

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | FR-A-1 083 199 (WESTINGHOUSE) * Seite 1, linke Spalte, Zeilen 1-4; Seite 2, linke Spalte, Zeile 36 - rechte Spalte, Zeile 7; Abbildung 1 * | 1,2,4 | F 04 C 29/02 F 16 N 7/18 F 16 N 7/36 |
| Y | | 3,5-7 | |
| | --- | | |
| X | US-A-2 551 973 (SCHUCK) * Spalte 1, Zeilen 1-7; Spalte 2, Zeilen 45-60; Spalte 3, Zeilen 48-57; Abbildungen 1,2 * | 1-4 | |
| | --- | | |
| X | DE-B-1 016 074 (K.S.B.) * Spalte 2, Zeilen 24-51; Abbildungen 1,2 * | 1-4 | |

<table>
<tr><td colspan="4">RECHERCHIERTE SACHGEBIETE (Int. Cl.4)</td></tr>
</table>

| Kategorie | Kennzeichnung | Betrifft Anspruch | RECHERCHIERTE SACHGEBIETE (Int. Cl.4) |
|---|---|---|---|
| | --- | | |
| X | GB-A- 452 875 (E.E.C.) * Anspruch 1; Abbildungen 1,2 * | 1-4 | F 04 C F 01 C F 16 N |
| | --- | | |
| Y | US-A-3 444 959 (U.S.M.) * Zusammenfassung; Spalte 5, Zeilen 23-38; Abbildungen 1,9 * | 3,5 | |
| | --- | | |
| Y | DE-C- 147 432 (JÜNGER) * Insgesamt * | 3,7 | |
| | ---     -/- | | |

Der vorliegende Recherchenbericht wurde für alle Patentansprüche erstellt.

| Recherchenort | Abschlußdatum der Recherche | Prüfer |
|---|---|---|
| DEN HAAG | 26-02-1987 | WALVOORT B.W. |

EPA Form 1503 03 82

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | BE-A- 402 771 (BOSCH)<br>* Seite 1, Zeilen 1-3; Seite 3, Zeile 12 - Seite 4, Zeile 2; Abbildungen 1,2 * | 5 | |
| Y | GB-A-1 230 049 (MICHELL BEARINGS)<br>* Seite 1, Zeilen 9-15; Seite 2, Zeilen 48-52; Abbildung 1 * | 6 | |
| A | US-A-3 796 283 (GENERAL MOTORS)<br>* Spalte 1, Zeilen 2-6; Spalte 2, Zeilen 49-64; Abbildungen 1-6 * | 1,7 | |
| A | US-A-1 591 733 (ARNOLD)<br>* Seite 1, Zeilen 1-10; Seite 2, Zeilen 12-40; Abbildung 1 * | 7 | |
| A,D | DE-B-1 939 717 (LEYBOLD-HERAEUS)<br>* Abbildung 1 * | 1 | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 26-02-1987 | WALVOORT B.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82